# EUROPEAN PATENT SPECIFICATION

(11) **EP 3 086 623 B1**
(45) Date of publication and mention of the grant of the patent: **21.10.2020**
(21) Application number: 15164464.8
(22) Date of filing: 21.04.2015
(51) Int. Cl.: H05B 33/08

(54) **DEVICE FOR THE REPLACEMENT OF ONE OR MORE PAIRS OF LINEAR FLUORESCENT TUBES INSTALLED IN A LUMINAIRE AND WIRED WITH MAGNETIC CONVENTIONAL CONTROL GEAR AND LUMINAIRE COMPRISING THE SAME**
VORRICHTUNG ZUM ERSETZEN VON EINEM ODER MEHREREN PAAREN VON LINEAREN, IN EINER LEUCHTE INSTALLIERTEN UND MIT EINEM KONVENTIONELLEN MAGNETISCHEN STEUERUNGSGETRIEBE VERDRAHTETEN LEUCHTSTOFFRÖHREN UND LAMPE DAMIT
DISPOSITIF POUR LE REMPLACEMENT D'UNE OU DE PLUSIEURS PAIRES DE TUBES FLUORESCENTS LINÉAIRES INSTALLÉS DANS UN LUMINAIRE ET CÂBLÉS AVEC UN ÉQUIPEMENT DE COMMANDE MAGNÉTIQUE CONVENTIONNEL ET LUMINAIRE COMPRENANT CELUI-CI

(43) Date of publication of application: 26.10.2016
(73) Proprietor: Wiva Group S.P.A., 50142 Firenze (IT)
(72) Inventor: Ranieri, Giuseppe, 52460 BUJE (HR)
(74) Representative: Savi, Massimiliano

(56) References cited:
- WO-A1-2009/136322
- WO-A1-2014/113886
- WO-A1-2015/001067
- CA-A1- 2 861 789
- US-A1- 2014 035 463
- US-A1- 2014 265 900

## Description

### TECHNICAL FIELD OF THE INVENTION

The present invention relates to the field of lighting systems and more specifically relates to a device for the replacement of one or more pairs of linear fluorescent tubes installed in a luminaire and wired with magnetic conventional control gear (C.C.G.).

### STATE OF THE ART

Existing linear fluorescent T8 lighting tubes, for instance with a power rating of 18W, provided with G13 base and having a typical length of 600mm, can be accommodated both in fixtures comprising an electronic control gear and in luminaires with magnetic conventional control gear (C.C.G.). In the latter case the fluorescent tubes can be connected each in series to a dedicated Electro Magnetic (E.M.) ballast for 18W, corresponding to a single C.C.G. wiring, or they can be connected in series to each other, in pairs, and, in turn, fed in series by a single dedicated E.M. ballast for instance rated for 36W ÷ 40W, corresponding to a double C.C.G. wiring.

LED lamps offer several advantages compared to conventional light sources, such as incandescent and fluorescent lamps. The most important are, among others, lower power consumption, higher luminous efficacy, high color rendering index and longer lifetime.

Among the various solutions that LEDs have successfully introduced in the lighting market there are the so-called LED tubes, adapted to replace traditional fluorescent tubes. LED tubes offer an advantageous solution compared to traditional fluorescent tubes in terms of energy consumption (typically LED tubes consume half or less of the power of the fluorescent tubes of equal size, of equal base and of equal dimensions with respect to the fluorescent tubes they are intended to replace), although replacement of fluorescent tubes with LED tubes involves performance issues, in terms of luminous flux, and retrofitting cost issues that make existing LED tubes still far from being a complete and costless equivalent to fluorescent tubes.

The installation of LED tubes in lighting fixtures provided with electronic control gears built in requires a re-wiring of the fixture and a change of the existing electronic ballast and related electrical wiring.

Document WO2015001067 discloses an example of LED based lighting device to retrofit existing fluorescent lighting tubes.

US patent application US2014035463A1 discloses an example of LED lamp provided with PWM control.

The installation of LED tubes in lighting fixtures provided with a single conventional control gear (C.C.G.) built in requires only the replacement of the glow starter with a jumper or a fuse. This solution requires only a little installation effort and it is reversible. The electrical safety of the retrofitted fixture is unchanged. On the opposite, the installation of LED tubes in lighting fixtures provided with a multiple conventional control gear (C.C.G.) built in cannot be done without modification of the fixture as in the case of the fixtures provided with single conventional control gear. Thus, the retrofitting of existing fixtures provided with a multiple conventional control gear is still complicated and expensive and that is the reason why retrofitting of this kind of fixtures, despite them being nowadays the most common installations worldwide, is not being performed at the same rate of the single conventional control gear fixtures. It is apparent that, if a simple and more cost effective way to retrofit fixtures provided with a multiple conventional control gear were available, many more of them would be upgraded with LED tubes due to the many advantages described before.

The purpose of the present invention is therefore to introduce a device for the replacement of one or more pairs of linear fluorescent T8 tubes connected in series inside fixtures with conventional magnetic wiring with LED tubes. The proposed solution according to the present invention is adapted to work with common mains voltages, for instance 110 ÷ 130 VAC or 220 ÷ 240 VAC and 50 ÷ 60 Hz frequency.

Further features and advantages of the present invention will be apparent in the following description of a non-limitative embodiment with reference to the figures in the accompanying drawings, which are diagrammatic and show functional blocks which are adapted to be made according to different circuitry solutions in practice. In detail:
figure 1 shows the wiring of state of the art fixtures comprising conventional magnetic control gear and one or more pairs of fluorescent tubes connected in series;
figure 2 shows the wiring of fixtures comprising an example of conventional magnetic control gear and one or more pairs of LED tubes according to the present invention connected in series;
figure 3 shows the generic block diagram of the present invention;
figure 4 shows the block diagram of a first preferred embodiment of the present invention;
figure 5 shows the block diagram of a second preferred embodiment of the present invention;
figure 6 shows the block diagram of a third preferred embodiment of the present invention;

### DETAILED DESCRIPTION OF THE INVENTION

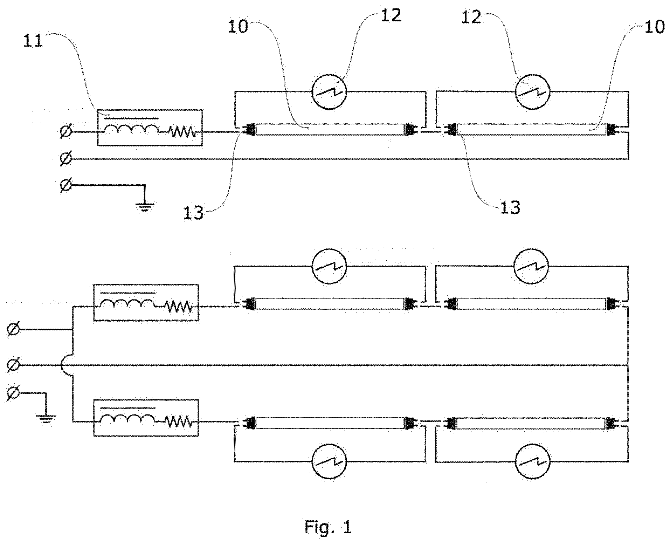

Figure 1 shows an example of state of the art wiring of fixtures comprising at least a pair of fluorescent tubes provided with conventional control gear and electromagnetic ballast. 18W fluorescent T8 tubes 10 are connected in series with double C.C.G. wiring, and an E.M. ballast 11 is, in turn, connected in series to the pair of tubes. The E.M. ballast has a power rating of 40 W. Each fluorescent tube 10 is ignited by a dedicated glow starter 12 connected in parallel with the tube 10, between pins of opposite side tube connectors 13. An additional power factor correction (P.F.C.) capacitor can be placed in parallel between the AC power supply terminals of the luminaire.

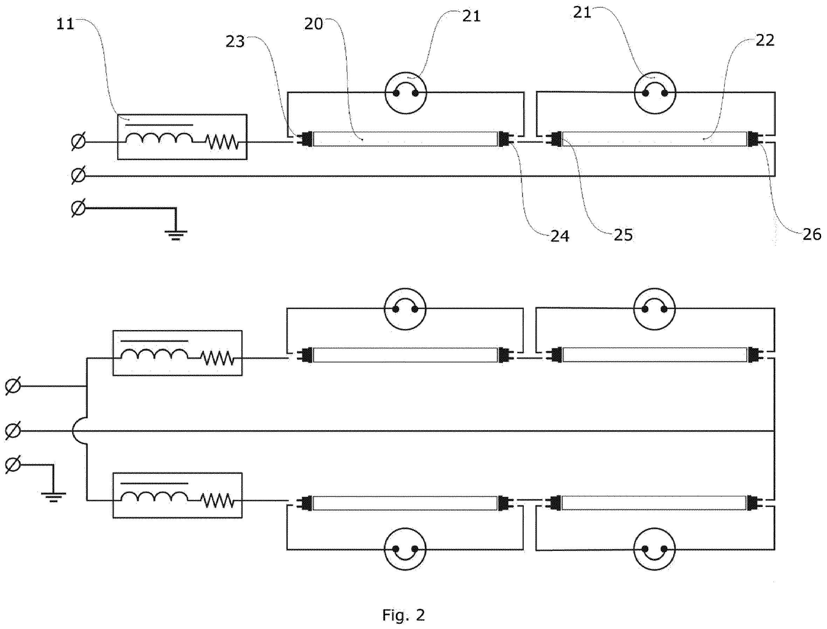

With reference to enclosed figure n. 2, the present invention, implemented as a LED tube replacement for fluorescent T8 tubes, can be used in luminaires with one or more pairs of fluorescent tubes 10 connected in series and powered by a series magnetic ballast 11 and two glow starters 12 (one for each fluorescent lamp) and possibly by a power factor correction capacitor placed in parallel between the terminals of the supply network of the luminaire. In Fig. 2, each fluorescent tube 10 of Fig.1 has been replaced by the LED tube device 20 according to the present invention, no matter what orientation, while each glow starter of Fig.1 has been replaced by a jumper or by a fuse 21. Advantageously, said jumper and said fuse 21 can be provided in a container having the same size and pinout of traditional glow starters so that no modification to the layout of the fixture is needed when replacing the original fluorescent tube 10 with the LED tube device 20 according to the present invention.

Due to the optimized performance of the LED tube according to the present invention, the P.F.C. capacitor between the AC power supply terminals of the luminaire is no longer needed.

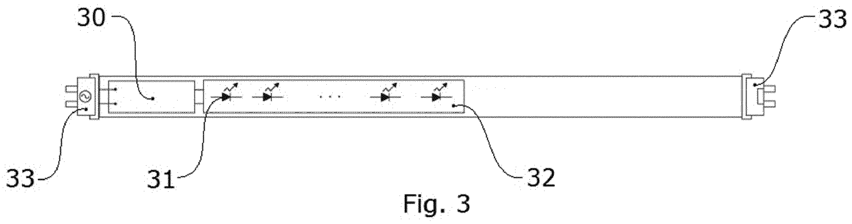

With reference to enclosed figure 3, the generic block diagram of the LED tube 20 according to the present invention comprises: a LED driver 30, adapted to convert the input AC voltage and current into DC voltage and current to supply the load comprising a plurality of LEDs 31 suitably connected to each other, associated to a first and a second input DC terminals and preferably mounted on a LED board 32. The block diagram of the LED tube 20 according to the present invention is displayed, in figure 3, within a tube provided with bi-pin connectors 33, preferably of G5 or G13 type, at the two ends, said tube being preferably similar, in shape and size, to fluorescent light type tubes.

Each one of the input terminals of said LED driver 30 is connected to a different pin of one of said bi-pin connectors 33, the pins of the other bi-pin connector 33 being short circuited.

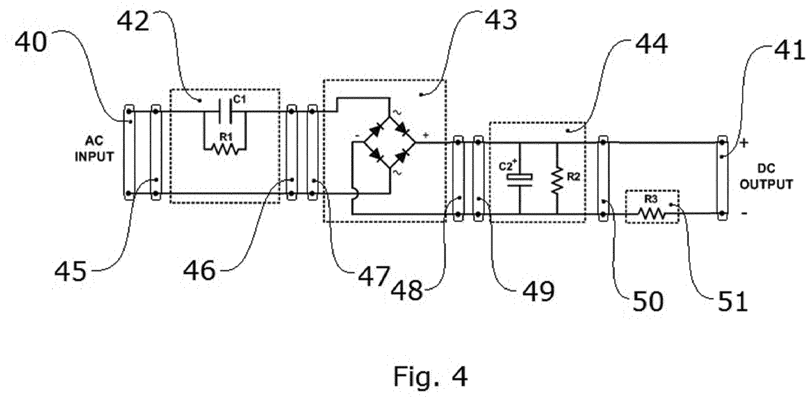

With reference to enclosed figure 4, the block diagram of a first preferred embodiment of said LED driver 30 is displayed comprising:
- AC input terminals 40 to be connected to the supply terminals;
- DC output terminals 41 to be connected to the DC input terminals of said plurality of LEDs 31;
- an input filter 42 comprising input terminals 45 and output terminals 46, said input filter 42 input terminals 45 being connected to said AC input terminals 40;
- a diode rectifier bridge 43 in turn comprising input terminals 47 and output terminals 48, said diode rectifier bridge 43 input terminals 47 being connected to the output terminals 46 of said input filter 42;
- an output filter 44 comprising input terminals 49 and output terminals 50, said output filter 44 input terminals 49 being connected to the output terminals 48 of said diode rectifier bridge 43;
- an output resistor R3 connected between one of said output terminals 50 of said output filter 44 and one of said output terminals 41, the other one of said output terminals 50 of said output filter 44 being connected to the other one of said output terminals 41.

The resistor R3 provides control and regulation of the output current.

Preferably said input filter 42 comprises a capacitor C1 in parallel with a resistor R1, connected between one of said input terminals 45 and one of said output terminals 46 of said input filter 42.

Preferably said output filter 44 comprises a capacitor C2 in parallel with a resistor R2, both connected between said input terminals 49 and said output terminals 50.

Said capacitors C1 and C2 act as a capacitive voltage divider circuit. Having chosen the capacitors C1 and C2 and the resistors R1 and R2 in a way that, at working frequency of 50 Hz, the impedance of the capacitors C1 and C2 is much lower than that of their shunt resistors R1 and R2 respectively, the output voltage will be Vout = Vin*C1/(C1 + C2).

The values of R1, C1, R2 and C2 are chosen depending on the LED board that said LED driver is adapted to supply. Furthermore, the values of R1, C1, R2 and C2 may be chosen considering the series RL circuit equivalent to said series magnetic ballast pre-installed in the luminaire.

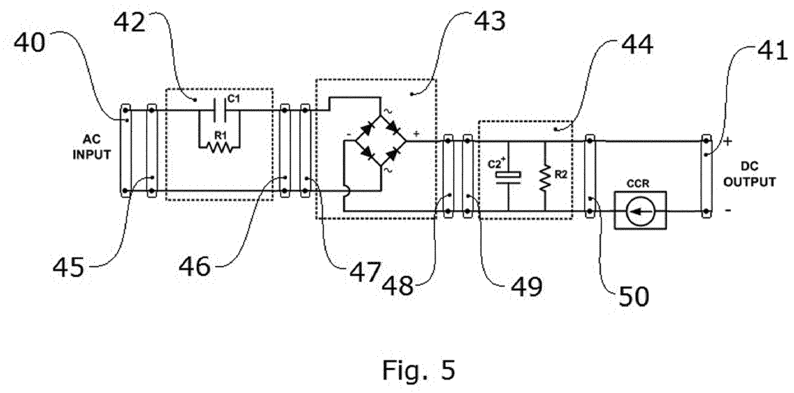

With reference to enclosed figure 5, the block diagram of a second preferred embodiment of said LED driver is displayed comprising:
- input terminals 40 to be connected to the supply terminals;
- output terminals 41 to be connected to the DC input terminals of said plurality of LEDs 31;
- an input filter 42 comprising input terminals 45 and output terminals 46, said input filter 42 input terminals 45 being connected to said input terminals 40;
- a diode rectifier bridge 43 in turn comprising input terminals 47 and output terminals 48, said diode rectifier bridge 43 input terminals 47 being connected to the output terminals 46 of said input filter 42;
- an output filter 44 comprising input terminals 49 and output terminals 50, said output filter 44 input terminals 49 being connected to the output terminals 48 of said diode rectifier bridge 43;
- a series constant current regulator (C.C.R.) connected between one of said output terminals 50 of said output filter 44 and one of said output terminals 41, the other one of said output terminals 50 of said output filter 44 being connected to the other one of said output terminals 41.

Said series constant current regulator is adapted to control the output current of said LED driver and preferably it comprises an integrated circuit (I.C.) adapted to produce a constant current output, even in case of wide fluctuations in the supply voltage amplitude.

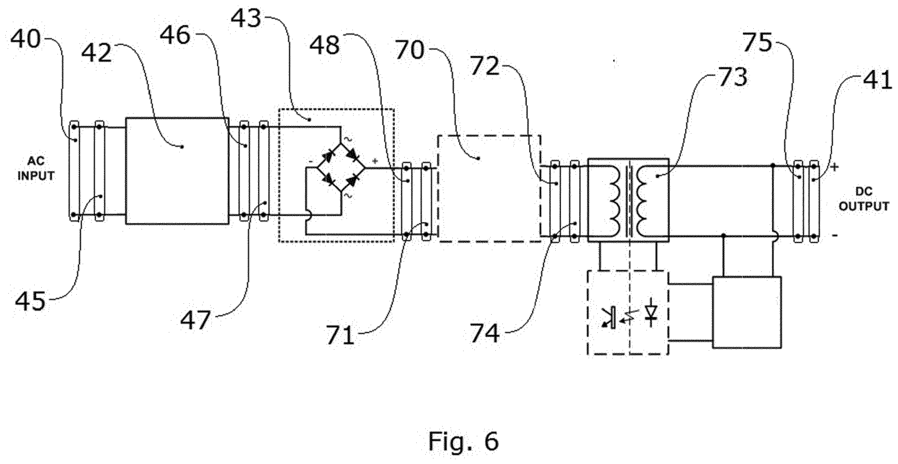

With reference to enclosed figure 6, the block diagram of a LED driver not covered by the claims is displayed comprising a switch mode power supply, said third preferred embodiment of said LED driver comprising:
- input terminals 40 to be connected to the supply terminals;
- output terminals 41 to be connected to the DC input terminals of said plurality of LEDs 31;
- an input filter 42 comprising input terminals 45 and output terminals 46, said input filter 42 input terminals 45 being connected to said input terminals 40;
- a diode rectifier bridge 43 in turn comprising input terminals 47 and output terminals 48, said diode rectifier bridge 43 input terminals 47 being connected to the output terminals 46 of said input filter 42;
- a power factor corrector (PFC) regulator 70 comprising input terminals 71 and output terminals 72, said input terminals 71 of said PFC 70 being connected to the output terminals 48 of said diode rectifier bridge 43;
- a DC/DC converter 73 comprising input terminals 74 and output terminals 75, said input terminals of said DC/DC converter being connected to the output terminals 72 of said PFC 70, said output terminals 75 of said DC/DC converter being connected to the output terminals 41 of said LED driver.

The DC/DC converter may comprise a switching stage, for instance a pulse width modulator (P.W.M.) stage, a high-frequency transformer or an inductor, depending on the isolated or non-isolated topology of the power supply, an output rectifier and an output filter, to provide the final DC output voltage and current.

Moreover, the DC/DC converter may be either "open-loop", so that it does not have a feedback circuit, or "closed-loop", so that a feedback circuit is present to monitor the output voltage and/or the output current and to compare them with a reference voltage and/or with a reference current.

Depending on the design requirements, the DC/DC converter controller stage may contain an isolation device, such as an optoisolator to isolate said controller from the DC output.

Advantageously, the device according to the present invention may be made in shape and size to be adapted to fit in a tube having the standard dimension of fluorescent tube lamps. Said tube having the standard dimension of fluorescent tube lamps can be made of glass or plastic or other materials and can be transparent or opaque.

In the enclosed figure 2, each fluorescent tube 10 of figure 1 has been replaced by the LED tube device 20 according to the present invention, no matter what orientation, while each glow starter 12 of figure 1 has been replaced by a jumper or a fuse 21. Said luminaire comprises:
- first and second input terminals to be connected to the AC mains terminals;
- a magnetic ballast 11 comprising an input terminal connected to the first of said luminaire input terminals;
- at least one pair of LED tube devices 20, 22 according to one or more of claims from 1 to 13 comprising a first 20 and a second 22 LED tube device, each one in turn comprising a plurality of LEDs 31, a LED driver 30 adapted to supply said plurality of LEDs 31, a tube having the standard dimension of fluorescent tube lamps 10 provided with bi-pin connectors 23, 24 at the two ends, the terminals of one of said bi-pin connectors 23, 24 being internally connected to the input terminals of said LED driver 30 and the terminals of the other one of said bi-pin connectors 23, 24 being internally short circuited, wherein:
   - a first terminal of a first bi-pin connector 23 of the first of said LED tubes is connected to the output terminal of said magnetic ballast 11;
   - a second terminal of said first bi-pin connector 23 of the first of said LED tubes is connected to a first terminal of the second bi-pin connector 24 of the first of said LED tubes, preferably via a jumper or a fuse 21;
   - a second terminal of said second bi-pin connector 24 of the first of said LED tubes 20 is connected to a first terminal of a first bi-pin connector 25 of the second of said LED tubes 22;
   - a second terminal of said first bi-pin connector 25 of the second of said LED tubes 22 is connected to a first terminal of the second bi-pin connector 26 of the second of said LED tubes 22, preferably via a jumper or a fuse 21;
   - a second terminal of said second bi-pin connector 26 of the second of said LED tubes 22 is connected to the second of said luminaire input terminals.

## Claims

1. Lighting device (20) for pin-to-pin replacement of linear fluorescent tubes (10) within magnetic ballast fixtures, the lighting device (20) comprising:
. a container comprising two ends, each provided with bi-pin connectors (33), the container being adapted to allow light to pass through and being adapted to receive:
. a plurality of LEDs (31) associated to a first and a second input DC terminals;
. a LED driver (30) comprising:
. AC input terminals (40) configured to be connected to the terminals of one of said bi-pin connectors (33);
. DC output terminals (41) to be connected to the first and to the second DC input terminals of said plurality of LEDs (31);
. an input current filter (42) comprising input terminals (45) connected to said AC input terminals (40);
. a diode rectifier bridge (43) comprising input terminals (47) connected to the output terminals (46) of said input filter (42);
. an output current filter (44) connected to the output terminals (48) of said diode rectifier bridge (43);
. a current regulator for regulating the DC output current from said DC output terminals (41) **characterized in that**:
said input current filter (42) comprises a first capacitor (C1) in parallel with a first resistor (R1) connected between one of said input terminals (45) and one of said output terminals (46) of said input filter (42);
said output current filter (44) comprises a second capacitor (C2) in parallel with a second resistor (R2) connected between said diode rectifier bridge (43) output terminals (48), the first capacitor (C1) and the second capacitor (C2) forming a capacitive voltage divider.

2. Device according to the preceding claim **characterized in that** said current regulator for regulating the DC output current is chosen in a group comprising a resistor (R3) and a series constant current regulator, said resistor (R3) and said constant current regulator being connected between one of the output terminals (50) of said output filter (44) and one of said DC output terminals (41).

3. Device according to one or more of the preceding claims **characterized in that** said filter capacitors (C1,C2) and said parallel filter resistors (R1,R2) are such that, at working frequency of 50 Hz, the impedance of the filter capacitors (C1,C2) is much lower than that of the parallel filter resistors (R1,R2), respectively.

4. Device according to one or more of the preceding claims **characterized in that** it is adapted to fit in a tube having the standard dimension of a fluorescent tube lamp (10).

5. Device according to claim 4 **characterized in that** said tube having the standard dimension of a fluorescent tube lamp (10) is provided with bi-pin connectors at the two ends.

6. Device according to one or more of the claims from 4 to 5 **characterized in that** said tube having the standard dimension of a fluorescent tube lamp is made of glass or plastic material.

7. Luminaire comprising:
. first and second input terminals to be connected to the AC mains terminals;
. a magnetic ballast comprising an input terminal connected to the first of said luminaire input terminals;
. at least one pair of lighting devices (20, 22) according to one or more of claims from 1 to 6 comprising a first (20) and a second (22) lighting device, each one in turn comprising a plurality of LEDs (31), a LED driver (30) adapted to supply said plurality of LEDs (31), a tube having the standard dimension of a fluorescent tube lamp (10) provided with bi-pin connectors (23, 24) at the two ends, the terminals of one of said bi-pin connectors (23, 24) being internally connected to the input terminals of said LED driver (30), wherein:
. a first terminal of a first bi-pin connector (23) of the first of said lighting devices (20) is connected to the output terminal of said magnetic ballast;
. a second terminal of said first bi-pin connector (23) of the first of said lighting devices (20) is connected to a first terminal of the second bi-pin connector (24) of the first of said LED tube devices, via a short circuit, a jumper or a fuse (21);
. a second terminal of said second bi-pin connector (24) of the first (20) of said lighting devices is connected to a first terminal of a first bi-pin connector (25) of the second of said lighting devices (22);
. a second terminal of said first bi-pin connector (25) of the second of said lighting devices (22) is connected to a first terminal of the second bi-pin connector (26) of the second of said lighting devices (22), via a short circuit, a jumper or a fuse (21);
. a second terminal of said second bi-pin connector (26) of the second of said lighting devices (22) is connected to the second of said luminaire input terminals.

8. Luminaire according to claim 7 **characterized in that** said jumper and said fuse (21) are provided within a container having the same size and the same pinout of a traditional glow starter for fluorescent lamps.

## Patentansprüche

1. Beleuchtungsvorrichtung (20) für Stift-zu-Stift Austausch von geraden Leuchtröhren (10) in magnetischen Ballastbefestigungen, wobei die Beleuchtungsvorrichtung (20) aus Folgendem besteht:
einem Behälter mit zwei Enden, von denen jedes mit einem Stecker mit zwei Stiften (33) versehen ist, wobei der Behälter so ausgelegt ist, dass er Licht durchlässt, und zur Aufnahme von Folgendem ausgelegt ist:
einer Vielzahl von LEDs (31), die an eine erste und eine zweite DC-Eingangsklemme angeschlossen sind;
einem LED-Treiber (30), der aus Folgendem besteht:
AC-Eingangsklemmen (40), die für den Anschluss mit den Klemmen eines der Stecker mit zwei Stiften (33) konfiguriert sind;
DC-Ausgängklemmen (41), die an die erste und die zweite DC-Eingangklemme der Vielzahl von LEDs (31) anzuschließen sind;
einem Eingangsstromfilter (42), der aus Eingangsklemmen (45) besteht, die an die AC-Eingangsklemmen (40) angeschlossen sind;
einer Dioden-Stromrichterbrücke (43), die Eingangsklemmen (47) enthält, welche an die Ausgangsklemmen (46) des Eingangsfilters (42) angeschlossen sind;
einem Ausgangsstromfilter (44), der an die Ausgangsklemmen (48) der Dioden-Stromrichterbrücke (43) angeschlossen ist;
einem Stromregler zum Regeln des DC-Ausgangsstroms von den DC-Ausgangsklemmen (41), **dadurch gekennzeichnet dass**:
der Eingangsstromfilter (42) einen ersten Kondensator (C1) parallel zu einem ersten Widerstand (R1) umfasst, der zwischen einer der Eingangsklemmen (45) und einer der Ausgangsklemmen (46) des Eingangsfilters (42) angeschlossen ist;
der Ausgangsstromfilter (44) enthält einen zweiten Kondensator (C2) parallel zu einem zweiten Widerstand (R2), der zwischen den Ausgangsklemmen (48) der Dioden-Stromrichterbrücke (43) angeschlossen ist, wobei der erste Kondensator (C1) und der zweite Kondensator (C2) einen kapazitiven Spannungsteiler bilden.

2. Vorrichtung nach dem vorhergehenden Anspruch, **dadurch gekennzeichnet, dass** der Stromregler für die Regelung des DC-Ausgangsstroms aus einer Gruppe gewählt wird, die aus einem Widerstand (R3)
und einem Serien-Gleichstromregler besteht, wobei der Widerstand (R3) und der Gleichstromregler zwischen einer der Ausgangsklemmen (50) des Ausgangsfilters (44) und einer der DC-Ausgangsklemmen (41) angeschlossen sind.

3. Vorrichtung nach einem oder mehreren der vorhergehenden Ansprüche, **dadurch gekennzeichnet, dass** die Filterkondesatoren (C1, C2) und die parallelen Filterwiderstände (R1, R2) so beschaffen sind, dass die Impedanz der Filterkondensatoren (C1, C2) bei einer Arbeitsfrequenz von 50 Hz.
viel niedriger ist als jeweils die der parallelen Filterwiderstände (R1, R2).

4. Vorrichtung nach einem oder mehreren der vorhergehenden Ansprüche, **dadurch gekennzeichnet, dass** sie dafür ausgelegt ist, dass in sie eine Röhre eingepasst werden kann, welche die Standardabmessungen einer Leuchtstoffröhre (10) hat.

5. Vorrichtung nach Anspruch 4, **dadurch gekennzeichnet, dass** die Röhre, welche die Standardabmessungen einer Leuchtstoffröhre (10) hat, an beiden Enden mit Steckern mit zwei Stiften versehen ist.

6. Vorrichtung nach einem oder mehreren der Ansprüche 4 bis 5, **dadurch gekennzeichnet, dass** die Röhre, welche die Standardabmessungen eine Leuchtstoffröhre hat, aus Glas oder Kunststoffmaterial hergestellt ist.

7. Beleuchtungskörper, der aus Folgendem besteht:
einer ersten und einer zweiten Eingangsklemme, die an die AC-Stromnetzklemmen angeschlossen werden sollen;
einem magnetischen Ballast, der aus einer Eingangsklemme besteht, die an die erste der Eingangsklemmen des Beleuchtungskörpers angeschlossen ist; zumindest einem Paar von Beleuchtungsvorrichtungen (20, 22) nach einem oder mehreren der Ansprüche 1 bis 6, das eine erste (20) und eine zweite (22) Beleuchtungsvorrichtung umfasst, wobei jede davon wiederum eine Vielzahl von LEDs (31), einen LED-Treiber (30), der für die Stromversorgung der Vielzahl von LEDs (31) ausgelegt ist, einer Röhre, welche die Standardabmessungen einer Leuchtstoffröhre (10) hat und an beiden Enden mit Steckern mit zwei Stiften (23, 24) versehen ist, wobei die Klemmen eines der Stecker mit zwei Stiften (23, 24) innen an die Eingangsklemmen des LED-Treibers (30) angeschlossen sind, wobei:
eine erste Klemme eines ersten Steckers mit zwei Stiften (23) der ersten der Beleuchtungsvorrichtungen (20) an die Ausgangsklemme des magnetischen Ballasts angeschlossen ist;
eine zweite Klemme des ersten Steckers mit zwei Stiften (23) der ersten der Beleuchtungsvorrichtungen (20) an eine erste Klemme des zweiten Steckers mit zwei Stiften (24) der ersten der LED-Röhrenvorrichtungen über einen Kurzschluss, einen Jumper, oder eine Sicherung (21) angeschlossen ist;
eine zweite Klemme des zweiten Steckers mit zwei Stiften (24) der ersten der Beleuchtungsvorrichtungen (20) an eine erste Klemme des ersten Steckers mit zwei Stiften (25) der zweiten der Beleuchtungsvorrichtungen (22) angeschlossen ist,
eine zweite Klemme des ersten Steckers mit zwei Stiften (25) der zweiten der Beleuchtungsvorrichtungen (22) an eine erste Klemme des zweiten Steckers mit zwei Stiften (26) der zweiten der Beleuchtungsvorrichtungen (22) über einen Kurzschluss, einen Jumper, oder eine Sicherung (21) angeschlossen ist;
eine zweite Klemme des zweiten Steckers mit zwei Stiften (26) der zweiten der Beleuchtungsvorrichtungen (22) an die Ausgangsklemme des Beleuchtungskörpers angeschlossen ist.

8. Beleuchtungskörper nach Anspruch 7, **dadurch gekennzeichnet, dass** der Jumper und die Sicherung (21) in einem Behälter bereitgestellt werden, der die gleiche Größe und die gleiche Pinbelegung hat wie ein herkömmlicher Glühstarter für Fluoreszenzröhren.

## Revendications

1. Dispositif d'éclairage (20) pour le remplacement broche à broche de tubes fluorescents linéaires (10) à l'intérieur d'appareils à ballast magnétique, le dispositif d'éclairage (20) comprenant :
une enceinte comprenant deux extrémités, chacune munie de connecteurs à deux broches (33), l'enceinte étant conçue pour permettre à la lumière de la traverser et étant conçue pour recevoir :
une pluralité de diodes électroluminescentes, DEL (31), associées à des première et seconde bornes d'entrée de courant continu, CC ;
un élément d'attaque de DEL (30) comprenant :
des bornes d'entrée de courant alternatif, CA (40), configurées pour être connectées aux bornes de l'un desdits connecteurs à deux broches (33) ;
des bornes de sortie CC (41) pour être connectées aux première et seconde bornes d'entrée CC de ladite pluralité de DEL (31) ;
un filtre de courant d'entrée (42) comprenant des bornes d'entrée (45) connectées auxdites bornes d'entrée CA (40) ;
un pont redresseur à diodes (43) comprenant des bornes d'entrée (47) connectées aux bornes de sortie (46) dudit filtre d'entrée (42) ;
un filtre de courant de sortie (44) connecté aux bornes de sortie (48) dudit pont redresseur à diodes (43) ;
un régulateur de courant pour réguler le courant de sortie CC desdites bornes de sortie CC (41), **caractérisé en ce que** :
ledit filtre de courant d'entrée (42) comprend un premier condensateur (C1) en parallèle avec une première résistance (R1) connectée entre l'une desdites bornes d'entrée (45) et l'une desdites bornes de sortie (46) dudit filtre d'entrée (42) ; ledit filtre de courant de sortie (44) comprend un second condensateur (C2) en parallèle avec une seconde résistance (R2) connectée entre les bornes de sortie (48) dudit pont redresseur à diodes (43), le premier condensateur (C1) et le second condensateur (C2) formant un diviseur de tension capacitif.

2. Dispositif selon la revendication précédente **caractérisé en ce que** ledit régulateur de courant pour réguler le courant de sortie CC est choisi parmi un groupe comprenant une résistance (R3) et un régulateur de courant constant en série, ladite résistance (R3) et ledit régulateur de courant constant étant connectés entre l'une des bornes de sortie (50) dudit filtre de sortie (44) et l'une desdites bornes de sortie CC (41).

3. Dispositif selon l'une ou plusieurs des revendications précédentes **caractérisé en ce que** lesdits condensateurs de filtre (C1, C2) et lesdites résistances de filtre en parallèle (R1, R2) sont tels que, à une fréquence de travail de 50 Hz, l'impédance des condensateurs de filtre (C1, C2) est bien inférieure à celle des résistances de filtre en parallèle (R1, R2), respectivement.

4. Dispositif selon l'une ou plusieurs des revendications précédentes **caractérisé en ce qu'**il est conçu pour s'ajuster dans un tube ayant la dimension standard d'une lampe à tube fluorescent (10).

5. Dispositif selon la revendication 4 **caractérisé en ce que** ledit tube ayant la dimension standard d'une lampe à tube fluorescent (10) est muni de connecteurs à deux broches aux deux extrémités.

6. Dispositif selon l'une ou plusieurs des revendications 4 à 5 **caractérisé en ce que** ledit tube ayant la dimension standard d'une lampe à tube fluorescent est constitué de verre ou de matière plastique.

7. Luminaire comprenant :
des première et seconde bornes d'entrée pour être connectées aux bornes d'un réseau CA ;
un ballast magnétique comprenant une borne d'entrée connectée à la première desdites bornes d'entrée de luminaire ;
au moins une paire de dispositifs d'éclairage (20, 22) selon l'une ou plusieurs des revendications 1 à 6 comprenant un premier (20) et un second (22) dispositif d'éclairage, chacun comprenant à son tour une pluralité de DEL (31), un élément d'attaque de DEL (30) conçu pour alimenter ladite pluralité de DEL (31), un tube ayant la dimension standard d'une lampe à tube fluorescent (10) muni de connecteurs à deux broches (23, 24) aux deux extrémités, les bornes de l'un desdits connecteurs à deux broches (23, 24) étant connectées de manière interne aux bornes d'entrée dudit élément d'attaque de DEL (30), dans lequel :
une première borne d'un premier connecteur à deux broches (23) du premier desdits dispositifs d'éclairage (20) est connectée à la borne de sortie dudit ballast magnétique ;
une seconde borne dudit premier connecteur à deux broches (23) du premier desdits dispositifs d'éclairage (20) est connectée à une première borne du second connecteur à deux broches (24) du premier desdits dispositifs à tube à DEL, via un court-circuit, un cavalier ou un fusible (21) ;
une seconde borne dudit second connecteur à deux broches (24) du premier (20) desdits dispositifs d'éclairage est connectée à une première borne d'un premier connecteur à deux broches (25) du second desdits dispositifs d'éclairage (22) ;
une seconde borne dudit premier connecteur à deux broches (25) du second desdits dispositifs d'éclairage (22) est connectée à une première borne du second connecteur à deux broches (26) du second desdits dispositifs d'éclairage (22), via un court-circuit, un cavalier ou un fusible (21) ;
une seconde borne dudit second connecteur à deux broches (26) du second desdits dispositifs d'éclairage (22) est connectée à la seconde desdites bornes d'entrée de luminaire.

8. Luminaire selon la revendication 7 **caractérisé en ce que** ledit cavalier et ledit fusible (21) sont fournis à l'intérieur d'une enceinte ayant la même taille et le même brochage qu'un starter à lueur classique pour lampes fluorescentes.
